# EUROPÄISCHE PATENTSCHRIFT

(11) **EP 2 504 204 B1**
(45) Veröffentlichungstag und Bekanntmachung des Hinweises auf die Patenterteilung: **10.08.2016**
(21) Anmeldenummer: 10766260.3
(22) Anmeldetag: 06.10.2010
(51) Int. Cl.: B60S 1/08

(54) **STEUERVORRICHTUNG UND STEUERVERFAHREN FÜR DIE ANTRIEBSEINHEIT EINER SCHEIBENWISCHANLAGE**
CONTROL APPARATUS AND CONTROL METHOD FOR DRIVE APPARATUS OF A WINDSCREEN WIPER SYSTEM
APPAREIL DE COMMANDE ET PROCEDE DE COMMANDE POUR UN APPAREIL D'ENTRAINEMENT D'UN SYSTÈME D'ESSUIE-GLACE

(30) Priorität: 27.11.2009 DE 102009047211
(43) Veröffentlichungstag der Anmeldung: 03.10.2012
(73) Patentinhaber: Robert Bosch GmbH, 70442 Stuttgart (DE)
(72) Erfinder: BRAUN, Peter, 77830 Buehlertal (DE); WEGNER, Norbert, 77815 Buehl (DE); RETSCH, Harald, 77866 Rheinau (DE)
(86) Internationale Anmeldenummer: PCT/EP2010/064877
(87) Internationale Veröffentlichungsnummer: WO 2011/064026

(56) Entgegenhaltungen:
- DE-A1- 4 330 112
- DE-A1- 10 235 024
- DE-A1- 10 246 433
- DE-A1-102006 061 679
- DE-A1-102008 011 229

## Beschreibung

Die Erfindung betrifft eine Steuervorrichtung für eine Antriebseinheit einer Scheibenwischanlage, insbesondere einer Scheibenwischanlage für ein Kraftfahrzeug. Ferner betrifft die Erfindung ein Verfahren zum Steuern einer solchen Antriebseinheit sowie die entsprechende Scheibenwischanlage.

### Stand der Technik

Scheibenwischer kommen in verschiedenen Fahrzeugtypen zum Einsatz, unter anderem als Front- und Heckscheibenwischer bei Kraftfahrzeugen. Typische Scheibenwischanlagen umfassen einen oder mehrere mit Wischerblättern versehene Wischerarme, die zyklisch über die zu reinigende Scheibe bewegt werden, um Feuchtigkeit von der Scheibe zu wischen. Als Antrieb für einen Wischerarm dient ein elektronisch gesteuerter Elektromotor, typischerweise ein rotierender Motor, dessen Bewegung entweder direkt oder über ein entsprechendes Getriebe in die gewünschte Wischbewegung umgesetzt wird. Dabei muss der Motor je nach Betriebssituation unterschiedlich große Drehmomente aufbringen, um den Wischerarm mit der gewünschten Wischgeschwindigkeit über die Scheibe zu bewegen. Insbesondere der Wischbetrieb auf einer trockenen Scheibe stellt aufgrund der dabei zwischen Scheibenoberfläche und Wischerblatt wirkenden hohen Reibungskräfte eine relativ hohe Belastung des Motors dar. Da eine von der Antriebseinheit aufzubringende Leistung grundsätzlich mit einem Energieeintrag in der Antriebseinheit und einer daraus resultierenden thermischen Belastung der Motorkomponenten einhergeht, sind Scheibenwischermotoren üblicherweise mit speziellen Schutzfunktionen ausgestattet, die ein Abschalten des Motors bei Überschreiten einer kritischen Temperatur bewirken. Infolge des Temperaturanstiegs im Motor nimmt auch sein maximales Drehmoment messbar ab. Um sicherzustellen, dass das gewünschte Drehmoment und somit auch die Scheibenwischerfunktion als solche in jeder Betriebssituation zur Verfügung steht, müssen die im Scheibenwischerbetrieb realistischerweise auftretenden Spitzenbelastungen des Motors bei der Dimensionierung der Antriebseinheit berücksichtigt werden. So müssen beispielsweise Motoren mit größerer Leistung als nötig verwendet werden, um gegebenenfalls auch einen längeren Betrieb auf trockener Scheibe möglichst ohne Aktivierung der Motorschutzfunktion sicherzustellen. Allerdings kollidiert der Wunsch nach einem leistungsstarken Scheibenwischerantrieb mit dem Bestreben, Fahrzeugkomponenten wie den Scheibenwischermotor möglichst kompakt und leicht zu gestalten, um dem im Fahrzeug vorhandenen Bauraum effektiv nutzen und gleichzeitig das Gewicht des Fahrzeugs reduzieren zu können.

Aus der DE 102006061679 A1 ist eine Vorrichtung zum Ansteuern einer Antriebseinheit einer Wischanlage bekannt, die eine Schutzfunktion vor thermischer Abschaltung der Antriebseinheit aufweist. Zur Vermeidung der Abschaltung wird die Wischhäufigkeit des Scheibenwischers in Abhängigkeit von einer von dem durch die Antriebseinheit beim Wischen aufzubringenden Drehmoment abhängigen Lastgröße eingestellt. Dabei wird die Wischhäufigkeit reduziert, sobald die Lastgröße einen vorgegebenen ersten Schwellwert überschreitet. Entsprechend wird die Wischhäufigkeit wieder erhöht, sobald die Lastgröße unter einen vorgegebenen zweiten Schwellwert fällt.

Aus der DE 10 2008 011 229 A1 geht eine gattungsgemässe Steuervorrichtung sowie ein Verfahren zur Reduktion der Wischhäufigkeit beim Überschreiten eines vorgegebenen Schwellwerts hervor, wobei als Schwellwert eine bestimmte Fahrgeschwindigkeit bzw. die bei dieser Fahrgeschwindigkeit auf den Wischarm wirkende Windlast dient. Hierdurch soll ein Schutz vor thermischer Überlastung realisiert werden.

Aus der DE 43 30 112 A1 geht eine Schaltanordnung zur Steuerung der Geschwindigkeit eines Scheibenwischers hervor, bei welcher zur Kompensation der durch höhere Windlast bedingten Drehzahlreduktion die Wischgeschwindigkeit beim Überschreiten eines vorgegebenen Drehmomentschwellwerts automatisch reduziert wird.

Es ist Aufgabe der Erfindung eine verbesserte Ansteuerung der Antriebseinheit einer Scheibenwischanlage bereitzustellen, die eine weitere Reduzierung der lastbedingten Motorerwärmung und damit verbundene weitere Erhöhung der Verfügbarkeit der vollen Motorleistung ermöglicht. Diese Aufgabe wird durch eine Steuervorrichtung für eine Antriebseinheit einer Scheibenwischanlage gemäß Anspruch 1 gelöst. Ferner wird die Aufgabe durch eine entsprechende Scheibenwischanlage gemäß Anspruch 10 sowie durch ein Verfahren gemäß Anspruch 11 gelöst. Weitere vorteilhafte Ausführungsformen der Erfindung sind in den abhängigen Ansprüchen angegeben.

### Offenbarung der Erfindung

Gemäß der Erfindung ist eine Steuervorrichtung zum Steuern einer Antriebseinheit für wenigstens einen Wischerarm einer Fahrzeug-Scheibenwischanlage vorgesehen, wobei die Steuervorrichtung ausgebildet ist, wenigstens eine Lastgröße der Antriebseinheit zu ermitteln und die Wischhäufigkeit des Wischerarms anhand des Verhältnisses der ermittelten Lastgröße zu wenigstens einem Lastschwellwert einzustellen. Dabei ist die Steuervorrichtung ferner ausgebildet, die Einstellung der Wischhäufigkeit in Abhängigkeit von der aktuellen Fahrgeschwindigkeit des Fahrzeugs vorzunehmen. Durch die Berücksichtigung der aktuellen Fahrgeschwindigkeit wird auf aerodynamische Effekte bei der Wischerarmbelastung, d. h. die durch den Fahrtwind verursachte zusätzliche Belastung des Wischermotors, eingegangen. Insbesondere lässt sich mithilfe der erfindungsgemäßen Steuervorrichtung der durch die Windlast verursachte Energieeintrag in der Antriebseinheit reduzieren und damit einem durch zu hohe thermische Belastung verursachten Ausfall dieser Antriebseinheit vorbeugen. Infolge dessen können für dieselbe Aufgabe kleinere Wischermotoren eingesetzt werden, ohne dass die Performance und die Verfügbarkeit des Wischermotors eingeschränkt wird. Die geringere Baugröße des Wischermotors bedingt eine Reduktion des Gewichst dieser Komponente. Durch Materialeinsparung können ferner auch die Herstellungskosten reduziert werden.

Erfindungsgemäss ist vorgesehen, dass die Steuervorrichtung ausgebildet ist, den Lastschwellwert in Abhängigkeit von der bei der aktuellen Fahrgeschwindigkeit auf den Wischerarm wirkenden Windlast zu bestimmen. Da die Windlast in etwa quadratisch mit der Fahrgeschwindigkeit einhergeht, kann durch die Berücksichtigung der auf den Wischerarm wirkenden Windlast eine bessere Aussage über den Gesamtlastzustand des Wischermotors gerade bei höheren Geschwindigkeiten gemacht werden.

Gemäß einer weiteren Ausführungsform der Erfindung ist die Steuervorrichtung ausgebildet, den Lastschwellwert bei einer Erhöhung der Fahrgeschwindigkeit um einen Betrag zu erhöhen, der im Wesentlichen dem durch die Fahrgeschwindigkeitserhöhung verursachten Zuwachs der auf den Wischerarm wirkenden Windlast entspricht. Da die Windlast einen geschwindigkeitsabhängigen Anteil an der Gesamtlast des Wischermotors darstellt, zeigen auch die beiden Operationsbereiche des Scheibenwischers, nämlich "Wischbetrieb auf nasser Scheibe" und "Wischbetrieb auf trockener Scheibe", einen der Windlast entsprechend folgenden Verlauf. Es ist daher sinnvoll, den Verlauf des den Übergang zwischen den beiden Operationsbereichen anzeigenden Lastschwellwerts entsprechend windlastabhängig zu gestalten.

Eine weitere Ausführungsform sieht vor, dass die Steuervorrichtung ausgebildet ist, die geschwindigkeitsabhängige Anpassung des Lastschwellenwerts erst bei höheren Fahrgeschwindigkeiten durchzuführen. Da der Einfluss der Windlast erst bei höheren Geschwindigkeiten deutlich zu Tage tritt, kann mithilfe dieser Maßnahme das Energiemodell deutlich vereinfacht werden.

Gemäß einer weiteren Ausführungsform ist die Steuervorrichtung ausgebildet, die Wischhäufigkeit bei einer Erhöhung der Fahrgeschwindigkeit und einem damit einhergehenden Zuwachs der auf den Wischerarm wirkenden Windlast so zu reduzieren, dass hierdurch der durch den Windlastzuwachs in der Antriebseinheit bedingte zusätzliche Energieeintrag im Wesentlichen kompensiert wird. Durch diese Maßnahme lässt sich erreichen, dass der Wischerbetrieb stets in einem gewünschten Operationsbereich erfolgt, ohne dass eine kritische Lastschwelle der Gesamtlast überschritten und eine thermische Schutzfunktion aktiviert wird.

Ferner sieht eine weitere Ausführungsform vor, dass die Steuervorrichtung ausgebildet ist, die Wischhäufigkeit automatisch zu reduzieren, sobald eine vorgegebene Fahrgeschwindigkeit überschritten wird. Durch eine geschickte Auswahl der Geschwindigkeitsschwelle kann sichergestellt werden, dass der Wischerbetrieb trotz quadratisch steigender Windlast stets in einem gewünschten Operationsbereich erfolgt. Hierdurch lässt sich mit einem sehr geringen Aufwand ein Energiemanagement realisieren, das die fahrgeschwindigkeitsabhängige Erhöhung der Gesamtlast berücksichtigt.

In einer weiteren Ausführungsform ist vorgesehen, dass die Steuervorrichtung ausgebildet ist, die Lastgröße anhand eines Modells zu ermitteln, welches den aktuellen Lastzustand der Antriebseinheit anhand von Erfahrungswerten, physikalischen Regeln und/oder ermittelten Referenzwerten nachbildet. Dabei ist die Steuervorrichtung ferner ausgebildet, die Wischhäufigkeit zu reduzieren, wenn die dabei ermittelte Lastgröße einen vorgegebenen Lastschwellwert überschreitet. Mithilfe eines solchen Modells kann eine sehr genaue Aussage über den aktuellen Lastzustand des Wischermotors getroffen werden. Aus dem Modell lassen sich ferner auch die einzelnen Lastgrößen des Wischermotors entnehmen, auch solche, die einer direkten Messung nicht oder nur schwer zugänglich sind.

Eine weitere Ausführungsform sieht vor, dass die Steuervorrichtung ausgebildet ist, zur Reduktion einer durch einen Dauerwischbetrieb verursachten thermischen Belastung der Antriebseinheit auf einen Intervallbetrieb mit frei parametrierbaren Intervallzyklen umzuschalten. Der Intervallbetrieb erlaubt es, den Energieeintrag im Wischermotor zu reduzieren, ohne den Wischerbetrieb einstellen zu müssen. Die freie Parametrierbarkeit der Intervallzyklen erlaubt es, den durchschnittlichen Energieeintrag im weiten Bereich zu variieren.

Einer weiteren Ausführungsform gemäß ist die Steuervorrichtung ausgebildet, zur Reduktion einer durch die Wischtätigkeit verursachten thermischen Belastung der Antriebseinheit die Wischhäufigkeit auf null zu reduzieren und die Wischtätigkeit erst infolge einer Benutzereingabe oder einer Bordnetzinformation wieder aufzunehmen. Durch das automatische Einstellen der Wischtätigkeit kann die Aktivierung der thermischen Schutzfunktion wirkungsvoll verhindert werden. Dies ist insbesondere dann der Fall, wenn die Wischhäufigkeit nicht weiter reduziert werden kann oder wenn eine solche Reduktion nicht sinnvoll ist. Die Wiederaufnahme der Wischtätigkeit durch eine Benutzereingabe oder eine Bordnetzinformation stellt sicher, dass die Wischtätigkeit bei Bedarf zur Verfügung steht.

Schließlich ist die Steuervorrichtung gemäß einer weiteren Ausführungsform ausgebildet, anhand des Verhältnisses wenigstens einer Lastgröße zu einem Lastschwellwert zu detektieren, ob ein Wischvorgang auf einer trockenen oder auf einer nassen Scheibe erfolgt. Ferner ist die Steuereinrichtung ausgebildet, die Wischhäufigkeit im Falle einer trockenen Scheibe so weit zu reduzieren, dass die thermische Belastung der Antriebseinheit unterhalb eines vorgegebenen Schwellwerts bleibt, ab dem ein thermischer Schutzmechanismus der Antriebseinheit ausgelöst wird. Gerade beim Wischen auf einer trockenen Scheibe und dem damit verbundenen hohen Lastzustand des Antriebsmotors ist die Gefahr gegeben, dass der Antriebsmotor thermisch abdriftet und eine thermische Schutzfunktion aktiviert wird. Durch den Vergleich der Lastgröße zu dem Lastschwellwert lässt sich der auf einer trocknen Scheibe erfolgende Wischvorgang eindeutig erkennen. Durch die Reduktion der Wischhäufigkeit lässt sich der Betrieb auf der trockenen Scheibe ohne die Aktivierung der thermischen Schutzfunktion aufrechterhalten.

Im Folgenden wird die Erfindung anhand von Zeichnungen näher erläutert. Es zeigen:
Fig. 1 ein Blockdiagramm eines Wischersystems mit einer Steuervorrichtung gemäß der Erfindung;
Fig. 2 ein Diagramm zur Veranschaulichung des Einflusses der Fahrgeschwindigkeit auf die Motorlast;
Fig. 3 ein Zeitdiagramm mit einer Darstellung der Motorlast und der Wischhäufigkeit zur Veranschaulichung des Verhaltensmodells des Energiemanagements der erfindungsgemäßen Steuervorrichtung;
Fig. 4 ein Diagramm zur Veranschaulichung des maximal verfügbaren Motormoments in Abhängigkeit von thermischer Aufheizung der Antriebseinheit;
Fig. 5 den Lastverlauf an benetzter Frontscheibe bei unterschiedlichen Fahrgeschwindigkeiten;

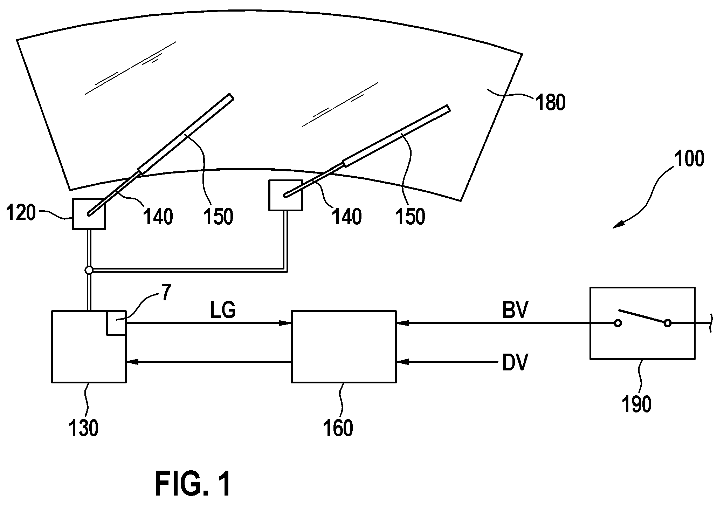

Die Figur 1 zeigt beispielhaft eine Scheibenwischeranlage 100, wie sie in typischer Weise an einer Frontscheibe eines Kraftfahrzeugs zum Einsatz kommt. Die Scheibenwischeranlage 100 umfasst dabei zwei Wischarme 140, die jeweils mit einem daran befestigten Wischerblatt 150 auf der zu reinigenden Scheibe 180 aufliegen. Das Wischerarmpaar 140 wird häufig von einer gemeinsamen Antriebseinheit 120 angetrieben, wobei im vorliegenden Beispiel jeder Wischarm 140 über eine eigene Antriebseinheit 120 verfügt. Eine typische Antriebseinheit 120 kann einen Rundläufermotor oder einen Reversier-Wischermotor umfassen, der direkt oder über ein geeignetes Getriebe (hier nicht gezeigt) mit dem jeweiligen Wischerarm 140 gekoppelt ist. Im Betrieb treibt die Antriebseinheit 120 den zugehörigen Wischarm 140 so an, dass das Wischerblatt 150 über die Oberfläche der Windschutzscheibe 180 streicht und dabei Feuchtigkeit sowie anderen Beschlag von der Scheibenoberfläche entfernt.

Zum Steuern jeder Antriebseinheit 120 umfasst die Scheibenwischeranlage 100 eine Steuereinheit 160 sowie eine der Steuereinheit 160 nachgeschaltete Treibereinheit 130. Die Steuereinheit 160 gibt vor, wie häufig und mit welcher Geschwindigkeit die Wischerarme 140 über die Windschutzscheibe 180 bewegt werden. Dies erfolgt in der Regel über eine Stellgröße, welche die Steuereinheit 160 der Treibereinheit 130 bereitstellt. Die Treibereinheit 130 wandelt diese Stellgröße in eine entsprechende Ansteuergröße für die Antriebseinheiten 120, beispielsweise eine oder mehrere Spannungen beziehungsweise Spannungspulse um, die in der Antriebseinheit 120 das gewünschte Antriebsmoment beziehungsweise die gewünschte Drehzahl erzeugen. Die Ansteuerung der Antriebseinheiten 120 erfolgt beispielsweise mithilfe pulsweitenmodulierter Signale. Alternativ kann als Stellgröße auch lediglich eine Wischhäufigkeit vorgegeben werden, woraus die Treibereinheit 130 die entsprechenden Ansteuergrößen für die jeweilige Antriebseinheit 120 ermittelt, um diese so anzutreiben, dass der Wischarm 140 mit der vorgegebenen Wischhäufigkeit WH betrieben wird.

Üblicherweise ermittelt die Steuereinheit 160 die Stellgröße für den gewünschten Betriebszustand anhand bestimmter Vorgaben, wie z. B. eine über einen Lenkstockschalter 190 eingegebene Benutzervorgabe BV oder eine Detektorvorgabe DV, beispielsweise von einem Regensensor.

Die Stellgröße der Steuereinheit 160 gibt die Funktionsweise der Scheibenwischanlage 100 vor und bestimmt somit unmittelbar die aktuelle Wischhäufigkeit WH. Die Wischhäufigkeit WH entspricht im Allgemeinen der Anzahl der Wischzyklen pro Zeiteinheit. Diese kann einerseits durch die Zeitdauer der einzelnen Wischzyklen und somit durch die Geschwindigkeit des Wischarms 140 bestimmt werden. Andererseits kann die Wischhäufigkeit WH auch durch das Wischintervall bestimmt werden, d. h. durch die Unterbrechungszeit zwischen zwei Wischzyklen, in der der Wischerarm in einer Ruheposition verharrt.

Erfindungsgemäß ist die Steuervorrichtung 160 ausgebildet, die Wischhäufigkeit WH in Abhängigkeit von einem Lastschwellwert LS einzustellen. Hierzu wird eine Lastgröße L des Wischermotors 120 ermittelt und mit einem vorgegebenen Lastschwellwert LS verglichen. Die Einstellung der Wischhäufigkeit erfolgt dann abhängig von dem Verhältnis der Lastgröße L zu dem Lastschwellwert. Insbesondere wird die Wischhäufigkeit WH beim Überschreiten des vorgegebenen Lastschwellwertes LS reduziert, um den Energieeintrag im Wischermotor 120 und die damit verbundene thermische Belastung zu begrenzen bzw. zu reduzieren. Dies kann zum einen kontinuierlich erfolgen, wobei die Reduktion der Wischhäufigkeit umso höher ausfällt, je höher die Belastung des Wischermotors 120 beziehungsweise je höher die Fahrgeschwindigkeit v ist. Zum anderen kann die Wischhäufigkeitsreduktion auch sprunghaft erfolgen, indem die Wischhäufigkeit WH erst nach Überschreiten eines vorgegebenen Schwellwerts um einen bestimmten Betrag reduziert wird.

Als Lastgrößen kommen grundsätzlich alle geeigneten Parameter des Wischermotors 120 infrage. Beispielsweise kann das vom Wischermotor 120 aufzubringende Drehmoment als Lastgröße L verwendet werden. Ferner kann die Belastung des Motors 120 beispielsweise anhand der Wicklungstemperatur T, des durch die Motorwicklung in fließenden Stromes, der Klemmspannung des Motors oder der momentanen Drehzahl des Motors ermittelt werden. Im Allgemeinen beschreibt die Lastgröße L, wie schwer sich der Wischerarm 140 über die Oberfläche der Windschutzscheibe 180 bewegen lässt, während die Belastung die vom Wischermotor 120 aufzubringende und folglich auch dort anfallende Energiemenge beschreibt. Es ist auch möglich, die Steuerung der Wischhäufigkeit WH unmittelbar anhand der Fahrgeschwindigkeit v durchzuführen. In diesem Fall stellt die Geschwindigkeit des Fahrzeugs quasi eine indirekte Lastgröße des Wischermotors 120 dar, während die auf den Wischerarm 140 wirkende Windlast eine direkte Lastgröße des Wischermotors 120 darstellt. Die Lastgröße L kann dabei beispielsweise durch direkte Messung, beispielsweise mittels eines Sensors oder Detektors, durch Ableitung aus anderen Größen oder Parametern, aber auch aus einer anhand eines Modells vorgenommenen Berechnung ermittelt werden. So kann das Drehmoment des Wischermotors 120 beispielsweise mithilfe eines in der Treibereinheit 130 angeordneten Lastdetektors 170 erfasst und der Steuervorrichtung 160 als Information bereitgestellt werden.

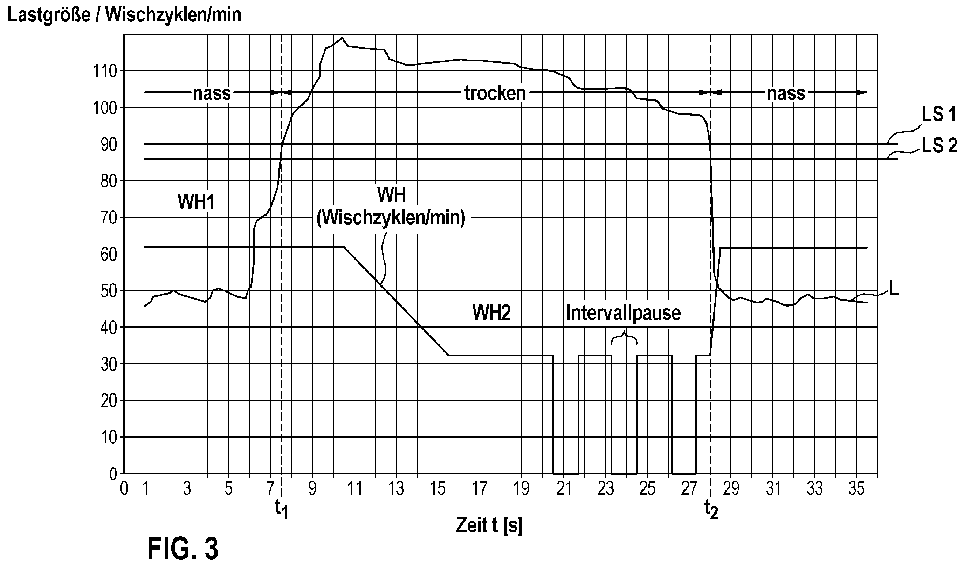

Die Figur 3 zeigt beispielhaft ein Verhaltensmodell des erfindungsgemäßen Energiemanagements bei einer bestimmten Fahrzeuggeschwindigkeit v und den dort definierten Lastschwellwerten LS1, LS2. Grundsätzlich können sich das hier gezeigte Verhaltensmodell sowie die diesem Modell zu Grunde liegenden Lastschwellen LS1, LS2 abhängig von der Fahrgeschwindigkeit v ändern. Insbesondere die Lastschwellen LS1, LS2 können mit der Fahrgeschwindigkeit v zunehmen. Aber auch weitere Parameter des Verhaltensmodells, wie z. B. der Betrag, um den sich die Wischhäufigkeit WH reduziert, die Zeitdauer, in der der Wischermotor bei einer anstehenden Reduktion der Wischhäufigkeit zunächst mit der aktuell eingestellten Wischhäufigkeit WH1, WH2 weiter betrieben wird, oder die Zeit, in der eine Änderung von einer ersten auf eine zweite Wischhäufigkeit WH1, WH2 stattfindet, können je nach Fahrgeschwindigkeit v unterschiedlich ausfallen.

Die Figur 3 veranschaulicht die Reaktion des Energiemanagements bei Änderung des Benetzungszustands der zu reinigenden Scheibe 180. Wie im linken Bereich des Diagramms ersichtlich ist, erfolgt der Wischervorgang zunächst auf einer nassen Scheibe mit einer vorgegebenen ersten Wischhäufigkeit WH1 von circa 62 Wischzyklen/Minute. Die ermittelte Lastgröße L, beispielsweise das vom Wischermotor 120 aufzubringende Drehmoment, liegt aufgrund der feuchten Scheibe deutlich unterhalb eines vorgegebenen ersten Lastschwellwerts LS1. Der Wischvorgang erfolgt unter diesen Bedingungen in herkömmlicher Weise, d. h. im Normalbetriebsmodus. Sobald der Regen aufhört, wie das hier in etwa ab der sechsten Sekunde der Fall ist, erfolgt der Wischvorgang nunmehr auf trockener Scheibe. Infolge dessen steigt die Lastgröße L deutlich nach oben und überschreitet dabei zu einer Zeit t₁ den Lastschwellwert LS1. Aufgrund der hohen Motorlast besteht die Gefahr, dass der Wischermotor 120 thermisch wegdriftet und die thermische Schutzfunktion aktiviert wird. Um das zu verhindern, wird ab diesem Zeitpunkt der erfindungsgemäße Energiemodellmodus aktiviert, in dem durch gezielte Reduktion der Wischhäufigkeit WH versucht wird, die thermische Belastung des Wischermotors 21 zu begrenzen bzw. auf ein niedrigeres Niveau zu drücken. Hierzu wird die eingestellte erste Wischhäufigkeit WH1 auf eine niedrigere zweite Wischhäufigkeit WH2 reduziert. Je nach Höhe der aktuellen Motorlast, kann die Steuervorrichtung 160 entscheiden, ob und wie lange der Wischbetrieb zunächst noch mit der ersten Wischhäufigkeit WH1 weitergeführt wird. Ferner wird entschieden, wie schnell die Reduktion der Wischhäufigkeit WH erfolgen soll. Im vorliegenden Ausführungsbeispiel wird der Wischvorgang für einen Zeitraum von ca. 3 Sekunden mit der ursprünglichen Wischhäufigkeit WH1 fortgesetzt und die Wischhäufigkeit erst danach kontinuierlich über einen Zeitraum von ca. 5 Sekunden auf die niedrige Wischhäufigkeit WH2 von ca. zwei 32 Wischzyklen/ Minute reduziert. In diesem Zeitraum findet bereits eine Entlastung des Wischermotors 120 statt, was sich im Rückgang der Lastgröße L bemerkbar macht. Um eine weitere Entlastung des Motors zu erreichen, wird z. B. nach weiteren fünf Sekunden auf einen Intervallbetrieb mit frei parametrierbaren Intervallzyklen umgeschaltet. Infolgedessen fällt die Lastgröße L weiter ab.

Aus dem Diagramm ist ferner ersichtlich, dass ab etwa der 28. Sekunde die ermittelte Lastgröße L aufgrund einer erneuten Benetzung der Scheibe wieder abfällt, beispielsweise durch plötzlich einsetzenden Regen. Die Lastgröße L unterschreitet dabei zu einem Zeitpunkt t₂ eine zweite Lastschwelle LS2, die etwas unterhalb der ersten Lastschwelle LS1 angeordnet ist, wodurch der Wechsel vom Energiemodellmodus in den normalen Betriebsmodus veranlasst wird. Infolgedessen steigt die Wischhäufigkeit WH wieder auf den ursprünglich eingestellten Wert WH1 an. Der Anstieg der Wischhäufigkeit erfolgt vorzugsweise sprunghaft, um bei einem einsetzenden Regen möglichst schnell die optimale Sichtbarkeit wiederherzustellen. Allerdings kann der Anstieg der Wischhäufigkeit auch über einen parametrierbaren Zeitraum erfolgen, insbesondere wenn die Intensität des einsetzenden Regens nur gering ist.

Ausgehend von dem Ansatz, das mit der Scheibenwischeranlage 100 nur eine mit Feuchtigkeit benetzte Fahrzeugscheibe gereinigt werden soll, lässt sich eine Rückschaltstrategie bis hin zum Intervallwischen an trockener Scheibe realisieren, die unmittelbar nach der Benetzung der Scheibe in den Ursprungszustand zurückfällt.

Die Wischhäufigkeit WH kann erfindungsgemäß dadurch reduziert werden, dass zunächst die Wischgeschwindigkeit bis zu einem Minimalwert reduziert wird und, falls eine weitere Reduktion notwendig ist, anschließend Wischintervalle zwischen den einzelnen Wischzyklen eingeführt werden. Im Intervallbetrieb können die Intervallpausen frei parametriert werden, wodurch eine kontinuierliche Reduktion der Wischhäufigkeit WH bis zum vollständigen Stillstand erfolgen kann. Der Intervallbetrieb kann insbesondere dann sinnvoll sein, wenn zur Lastreduktion der Antriebseinheit die Wischgeschwindigkeit nicht weiter reduziert werden kann, ohne dass ein Rattern des Wischerblatts 150 auf der Scheibenoberfläche auftritt. Entsprechend kann die Wischhäufigkeit WH wieder erhöht werden, indem zunächst die einzelnen Wischintervalle reduziert werden und anschließend, nachdem die Wischintervalle auf null reduziert worden sind, die Wischgeschwindigkeit weiter erhöht wird. Es ist jedoch auch möglich die Wischgeschwindigkeit und die Wischintervalle unabhängig voneinander zu variieren, um eine gewünschte Wischhäufigkeit WH einzustellen.

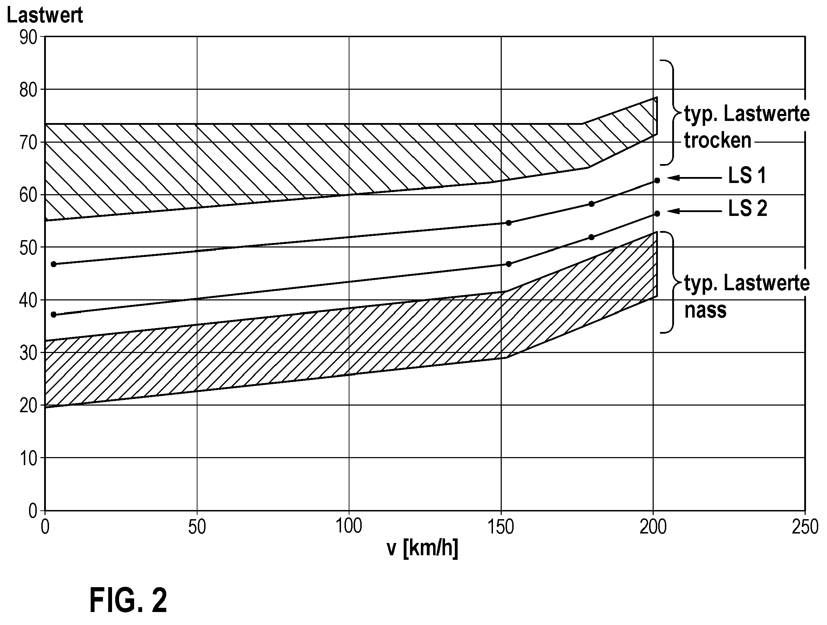

Das in der Figur 2 dargestellte Diagramm zeigt die auf den Wischerarm 140 im Wischbetrieb auf nasser und trockener Scheibe wirkenden Belastungen bei unterschiedlichen Fahrgeschwindigkeiten. Dabei ist zunächst ersichtlich, dass die typischen Lastwerte beim Wischen auf nasser Scheibe aufgrund der durch die Feuchtigkeit reduzierten Reibung zwischen Wischerblatt und Scheibe deutlich unterhalb der typischen Lastwerte für das Wischen an trockener Scheibe liegen, bei dem die starke Reibung hohe Drehmomente erfordert. Ferner ist ersichtlich, dass die Lastwerte sowohl auf trockener als auch auf nasser Scheibe mit zunehmender Geschwindigkeit v steigen. Die Steigung der Lastwertkurve bei den höheren Geschwindigkeiten fällt dabei deutlich größer als bei niedrigeren Geschwindigkeiten aus, da die Geschwindigkeit v quadratisch in die Last am Wischerarm einfließt. Aus der Figur 2 ist ferner sichtlich, dass die Lastschwellen LS1, LS2, anhand der die Steuervorrichtung 120 die Anpassung der Wischhäufigkeit WH durchführt, ebenfalls mit der Geschwindigkeit v steigen. Wie im vorliegenden Ausführungsbeispiel gezeigt ist, lassen sich die Lastschwellen LS1, LS2 mit Stützstellen abhängig von der Fahrgeschwindigkeit parametrieren.

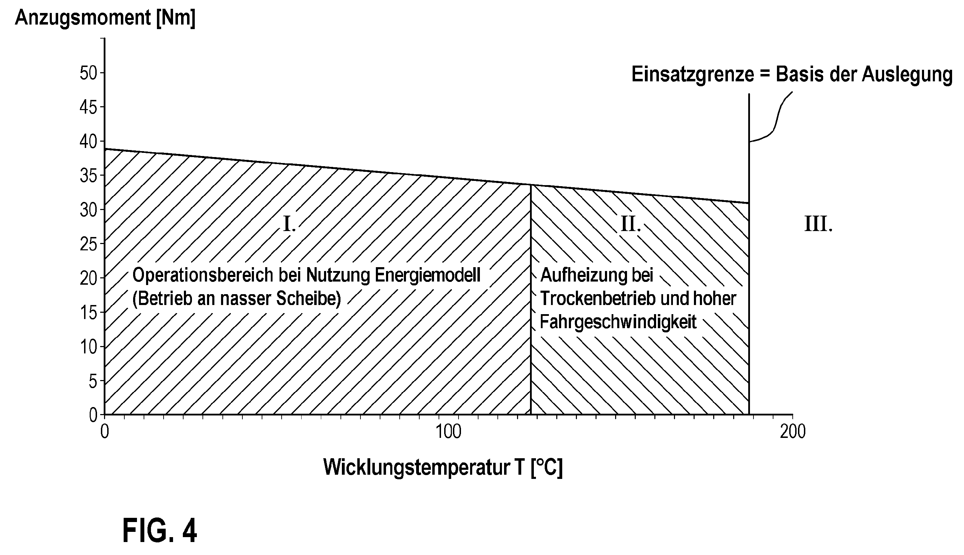

Die Figur 4 zeigt ein Diagramm, das stark vereinfacht den Zusammenhang zwischen dem maximal verfügbaren Motormoment und der thermischen Aufheizung der Motorkomponenten beschreibt. Hierbei wird insbesondere die durch den Temperaturanstieg im Motorinneren bedingte Reduktion des Anzugmoments ersichtlich. Zurückzuführen ist der Momentabbau in erster Linie auf den thermisch bedingten Anstieg des ohmschen Widerstands der Motorwicklungen. Aber auch ein thermisch bedingter Abbau des magnetischen Flusses im Anker führt zu einem deutlichen Rückgang des Anzugmoments. Insbesondere bei hohen Temperaturen sind diese Effekte für einen deutlich schlechteren Wirkungsgrads der Antriebseinheit verantwortlich. In der Figur 4 sind ein erster und ein zweiter Operationsbereich I, II des Wischermotors dargestellt. Der erste Operationsbereich I entspricht dabei im Wesentlichen dem Betrieb auf nasser Scheibe, der durch eine relativ niedrige Wicklungstemperatur T gekennzeichnet ist. In diesem Bereich bleibt der Wischermotor aufgrund der relativ geringen Belastung thermisch stabil und kann daher ein hohes maximales Anzugsmoment bereitstellen. Hingegen ist der zweite Operationsbereich II, der im Wesentlichen dem Betrieb auf trockener Scheibe bei hoher Fahrgeschwindigkeit entspricht, durch eine hohe Wicklungstemperatur T und ein entsprechend reduziertes Anzugsmoment gekennzeichnet. In diesem Bereich II besteht die Gefahr, dass der Wischermotor aufgrund des relativ hohen Energieeintrags thermisch wegdriftet, so dass die Wicklungstemperatur die Einsatzgrenze überschreitet und infolgedessen Defekte an der Motorwicklung auftreten. Um zu verhindern, dass der Wischermotor in einen dritten Bereich III jenseits der Einsatzgrenze driftet, sind üblicherweise thermische Schutzfunktionen vorgesehen, die kurz vor dem Erreichen der Einsatzgrenze eine Abschaltung des Wischermotors bewirken.

Da der Wischermotor im ersten Operationsbereich I thermisch stabil bleibt, während sich die Wicklungstemperatur T im zweiten Operationsbereich tendenziell erhöht, stellt der Übergang zwischen den beiden Operationsbereichen I, II eine Grenze der thermischen Stabilität dar. Ziel der vorliegenden Erfindung ist es, sicherzustellen, dass der Antriebsmotor mithilfe der hier beschriebenen Konzepte so weit wie möglich im ersten Operationsbereich I betrieben wird.

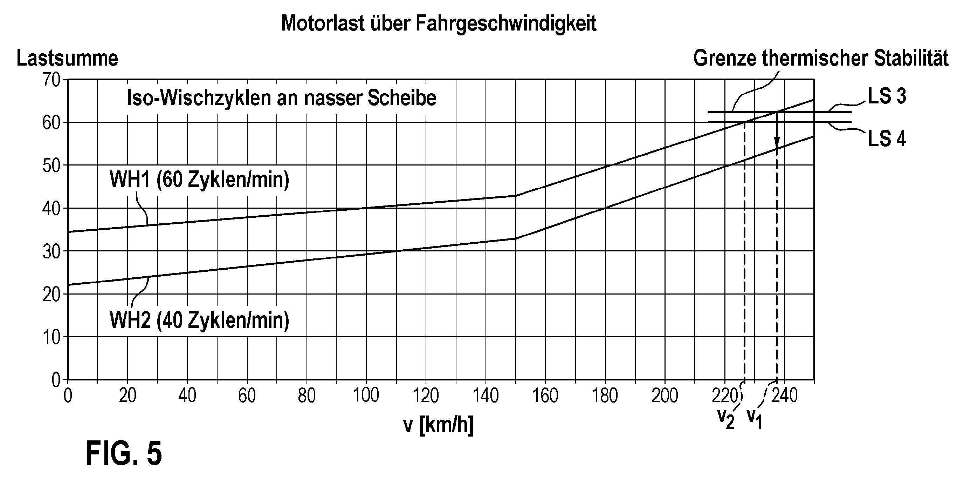

Eine geschwindigkeitsabhängige Reduktion der Wischhäufigkeit WH zwecks Begrenzung des Energieeintrags im Wischermotor 120 kann grundsätzlich auch automatisch erfolgen, ohne dass hierzu auf Lastgrößen L des Wischermotors zurückgegriffen werden muss. Beispielsweise kann die Wischhäufigkeit WH ab einer vorgegebenen Fahrgeschwindigkeit v₁ automatisch um einen vorgegebenen Betrag reduziert werden. Die entsprechende Fahrgeschwindigkeit v₁ kann in diesem Fall als eine bereits im Vorfeld anhand von Messungen, Erfahrungswerten und/oder Berechnungen ermittelte und in einer Speichereinrichtung der Steuervorrichtung abgelegte Information vorliegen. Der Vorteil hierbei ist, dass damit eine Erweiterung der Einsatzgrenzen des Wischermotors auch ohne Kenntnis der einzelnen Lastgrößen beziehungsweise der Gesamtlast des Wischermotors realisiert werden kann. Da in diesem Fall die Ermittlung des Lastzustands des Wischermotors durch Messung beziehungsweise Berechnung einzelner Lastgrößen nicht notwendig ist, kann damit ein besonders einfaches und dennoch effektives Energiemanagement realisiert werden. Dieses Energiemanagement wird im Folgenden anhand der Figur 5 näher beschrieben. Dabei verdeutlicht das hier gezeigte Diagramm den Zusammenhang zwischen der Motorlast an einer benetzten Frontscheibe und der Geschwindigkeit v des Fahrzeugs. Die obere Kurve zeigt den Lastverlauf beim Wischen im Dauerbetrieb mit einer ersten Wischhäufigkeit WH1 (60 Zyklen pro Minute), während die untere Kurve einem Wischbetrieb mit einer niedrigeren zweiten Wischhäufigkeit (40 Zyklen pro Minute) entspricht. Wie hier gezeigt ist, steigt die Gesamtlast aufgrund der aerodynamischen Effekte mit zunehmender Fahrgeschwindigkeit überproportional an. Bei einer Grenzgeschwindigkeit v₁ von ca. 237 km/h erreicht die obere Kurve eine vorgegebene Lastschwelle LS3. Die beispielsweise anhand von Erfahrungswerten gewonnene Lastschwelle LS3 kann z. B. die Grenze thermischer Stabilität des Wischermotors markieren. Das vereinfachte Energiemanagement kann, um ein Überschreiten dieser Grenze und damit dem Betrieb des Wischermotors in einem thermisch instabilen Operationsbereich zu verhindern, die eingestellte Wischhäufigkeit WH1 beim Erreichen der Grenzgeschwindigkeit v₁ automatisch auf die niedrigere Wischhäufigkeit WH2 reduzieren. Wie aus der Figur 5 ersichtlich ist, weist die Lastsumme des Wischermotors bei der niedrigeren Wischhäufigkeit WH2 einen niedrigeren Wert deutlich unterhalb der Lastschwelle LS3. Somit lässt sich mit der Reduktion der Wischhäufigkeit der Energieeintrag und damit auch die thermische Belastung des Wischermotors deutlich reduzieren.

Sobald die Fahrgeschwindigkeit v wieder unterhalb die Grenzgeschwindigkeit v₁ fällt, kann die Wischhäufigkeit von der niedrigen Wischhäufigkeit WH2 wieder auf die ursprünglich eingestellte Wischhäufigkeit WH1 angehoben werden. Um ein stabiles Verhalten dieses Schaltkonzepts zu gewährleisten, kann eine Schalthysterese vorgesehen werden. Dabei erfolgt der Wechsel von der niedrigen Wischhäufigkeit WH2 auf die höhere Wischhäufigkeit WH1 erst nach Unterschreiten einer zweiten Grenzgeschwindigkeit v₂, die niedriger als die erste Grenzgeschwindigkeit ist und die einen zweiten Lastschwellwert LS4 definiert. Je nach Anwendung können auch mehrere Grenzgeschwindigkeiten vorgegeben sein, bei deren Überschreiten die Wischhäufigkeit automatisch um einen vorgegebenen Betrag reduziert wird. Mithilfe der automatischen Reduktion der Wischhäufigkeit WH bei Überschreiten einer vorgegebenen Fahrgeschwindigkeit ist es möglich, eine thermische Überlastung des Motors 120 quasi vorausschauend zu verhindern.

Die beiden Lastschwellen LS3, LS4 beschreiben die für einen beispielhaften Wischermotor geltende Grenzbelastung, die soweit wie möglich vermieden wird, um thermisch stabil die erforderliche Leistung abzugeben. Um die Grenze LS3 nicht zu überschreiten, kann beispielsweise die Wischhäufigkeit in Stufe 2 fahrzeuggeschwindigkeitsabhängig und/oder unter Berücksichtigung des thermischen Zustands frei parametrierbar verändert werden.

Obwohl das im Zusammenhang mit der Figur 5 beschriebene mithilfe einer Grenzgeschwindigkeit getriggerte Energiemanagement ohne eine Lastgrößenermittlung und dem Einsatz des Energiemodells auskommt, ist es grundsätzlich möglich, beide Methoden gleichzeitig in einem gemeinsamen Energiemanagementkonzept zu verwenden. Die Reduktion der Wischhäufigkeit WH erfolgt dann sowohl automatisch anhand einer vorgegebenen Fahrgeschwindigkeit v₁ als auch anhand einer ermittelten Lastgröße L. Beispielsweise kann die Wischhäufigkeit WH zunächst anhand eines Vergleichs der ermittelten Lastgröße L mit einem vorgegebenen Lastschwellwert LS auf eine dem entsprechende Wischhäufigkeit eingestellt werden und unabhängig von der ermittelten Lastgröße L beim Überschreiten einer vorgegebenen Fahrgeschwindigkeit v₁ automatisch auf eine vorgegebene Wischhäufigkeit reduziert werden.

Wie anhand der vorhergehenden Ausführungsbeispiele erläutert, sieht das erfinderische Konzept verschiedene Maßnahmen zur Reduzierung der thermischen Belastung des Wischermotors vor, die sowohl einzeln für sich allein als auch in Kombination miteinander realisiert werden können. Diese Maßnahmen umfassen:
- Parametrisieren der Lastschwellen LS abhängig von der Fahrgeschwindigkeit, um auf ihre dynamische Effekte bei der Wischarmbelastung einzugehen.
- Vorsehen verschiedener Lastschwellen, die vor allem bei hohen Fahrgeschwindigkeiten parametriert werden, so dass insbesondere die Wischhäufigkeit in Stufe 2 variabel nach einer gewissen Zeit und/oder bei einer ermittelten Wischermotortemperatur frei programmierbar zurückgenommen wird, damit sich der Wischermotor thermisch stabilisiert beziehungsweise eine möglichst hohe Wischhäufigkeit bereitgestellt wird, ohne dass thermische Schutzmechanismen wirksam werden.
- Ergänzung der parametrierbaren Wischhäufigkeit bei Über- bzw. Unterschreiten der Lastschwellen um einen Intervallbetrieb mit sich ändernden/frei parametrierbaren Intervallzyklen.
- Einführung weiterer Lastschwellen innerhalb des Betriebs im Energiemodellmodus, mit deren Hilfe entschieden werden kann, ob und wie lange in den gewünschten Wischhäufigkeiten oder Intervallzyklendauern verharrt wird.
- Änderung der Wischhäufigkeit bei Unterschreiten der Lastschwelle LS2 zu einer kontinuierlichen Zunahme der Wischhäufigkeit.
- Reduzierung der Wischhäufigkeit auf null, so dass der Wischbetrieb erst wieder aufgenommen werden kann, wenn der Lenkstockschalter betätigt wird oder eine Information aus dem Fahrzeugbordnetz vorliegt, dass eine Scheibenbenetzung zu erwarten ist.

## Patentansprüche

1. Steuervorrichtung (160) zum Steuern einer Antriebseinheit (120) für wenigstens einen Wischerarm (140) einer Fahrzeug-Scheibenwischanlage (100), wobei die Steuervorrichtung (160) ausgebildet ist, wenigstens eine Lastgröße (L) der Antriebseinheit (120) zu ermitteln und die Wischhäufigkeit (WH) des Wischerarms (140) anhand des Verhältnisses der ermittelten Lastgröße (L) zu wenigstens einem Lastschwellwert (LS) einzustellen, und
wobei die Steuervorrichtung (160) ausgebildet ist, die Einstellung der Wischhäufigkeit (WH) in Abhängigkeit von der aktuellen Fahrgeschwindigkeit (v) des Fahrzeugs vorzunehmen,
**dadurch gekennzeichnet,**
**dass** die Steuervorrichtung (160) ausgebildet ist, den Lastschwellwert (LS) in Abhängigkeit von der bei der aktuellen Fahrgeschwindigkeit (v) auf den Wischerarm (140) wirkenden Windlast zu bestimmen.

2. Steuervorrichtung (160) nach Anspruch 1,
**dadurch gekennzeichnet,**
**dass** die Steuervorrichtung (160) ausgebildet ist, den Lastschwellwert (LS1, LS2) bei einer Erhöhung der Fahrgeschwindigkeit (v) um einen Betrag zu erhöhen, der im Wesentlichen dem durch die Fahrgeschwindigkeitserhöhung verursachten Zuwachs der auf den Wischerarm (140) wirkenden Windlast entspricht.

3. Steuervorrichtung (160) nach Anspruch 1 oder 2,
**dadurch gekennzeichnet,**
**dass** die Steuervorrichtung (160) ausgebildet ist, die geschwindigkeitsabhängige Anpassung des Lastschwellwerts (LS) erst bei höheren Fahrgeschwindigkeiten (v) durchzuführen.

4. Steuervorrichtung (160) nach einem der vorhergehenden Ansprüche 1 bis 3,
**dadurch gekennzeichnet,**
**dass** die Steuervorrichtung (160) ausgebildet ist, die Wischhäufigkeit (WH) bei einer Erhöhung der Fahrgeschwindigkeit (v) und einem damit einhergehenden Zuwachs der auf den Wischerarm (140) wirkenden Windlast so zu reduzieren, dass hierdurch der durch den Windlastzuwachs in der Antriebseinheit (120) bedingte zusätzliche Energieeintrag im Wesentlichen kompensiert wird.

5. Steuervorrichtung (160) nach einem der vorhergehenden Ansprüche,
**dadurch gekennzeichnet,**
**dass** die Steuervorrichtung (160) ausgebildet ist, die Wischhäufigkeit (WH) automatisch zu reduzieren, sobald eine vorgegebene Fahrgeschwindigkeit (v1) überschritten wird.

6. Steuervorrichtung (160) nach einem der vorhergehenden Ansprüche,
**dadurch gekennzeichnet,**
**dass** die Steuervorrichtung (160) ausgebildet ist, die Lastgröße (L) anhand eines Modells zu ermitteln, welches den aktuellen Lastzustand der Antriebseinheit (120) anhand von Erfahrungswerten, physikalischen Regeln und/oder ermittelten Referenzwerten nachbildet,
wobei die Steuervorrichtung (160) ferner ausgebildet ist, die Wischhäufigkeit (WH) zu reduzieren, wenn die dabei ermittelte Lastgröße (L) einen vorgegebenen Lastschwellwert (LS) überschreitet.

7. Steuervorrichtung (160) nach einem der vorhergehenden Ansprüche,
**dadurch gekennzeichnet,**
**dass** die Steuervorrichtung (160) ausgebildet ist, zur Reduktion einer durch einen Dauerwischbetrieb verursachten thermischen Belastung der Antriebseinheit (120) auf einen Intervallbetrieb mit frei parametrierbaren Intervallzyklen umzuschalten.

8. Steuervorrichtung (160) nach einem der vorhergehenden Ansprüche,
**dadurch gekennzeichnet,**
**dass** die Steuervorrichtung (160) ausgebildet ist, zur Reduktion einer durch die Wischtätigkeit verursachten thermischen Belastung der Antriebseinheit (120) die Wischhäufigkeit (WH) auf null zu reduzieren und die Wischtätigkeit erst infolge einer Benutzereingabe oder einer Bordnetzinformation wieder aufzunehmen.

9. Steuervorrichtung nach einem der vorhergehenden Ansprüche,
**dadurch gekennzeichnet,**
**dass** die Steuervorrichtung (160) ausgebildet ist, anhand des Verhältnisses wenigstens einer Lastgröße (L) zu einem Lastschwellwert (LS) zu detektieren, ob ein Wischvorgang auf einer trockenen oder auf einer nassen Scheibe erfolgt, und
**dass** die Steuereinrichtung (160) ferner ausgebildet ist, die Wischhäufigkeit (WH) im Falle einer trockenen Scheibe so weit zu reduzieren, dass die thermische Belastung der Antriebseinheit (120) unterhalb eines Schwellwerts bleibt, ab dem ein thermischer Schutzmechanismus der Antriebseinheit (120) ausgelöst wird.

10. Scheibenwischanlage (100) für ein Fahrzeug umfassend eine Antriebseinheit (120) für wenigstens einen Wischerarm (140) und eine Steuervorrichtung (160) gemäss dem Anspruch 1.

11. Verfahren zum Steuern einer Antriebseinheit (120) einer wenigsten einen Wischerarm (140) aufweisenden Scheibenwischanlage (100) eines Fahrzeugs,
wobei wenigstens eine Lastgröße (L) der Antriebseinheit (120) ermittelt und die Wischhäufigkeit (WH) des Wischerarms (140) anhand des Verhältnisses der ermittelten Lastgröße (L) zu wenigstens einem Lastschwellwert (LS) eingestellt wird, und
wobei die Einstellung der Wischhäufigkeit (WH) in Abhängigkeit von der aktuellen Fahrgeschwindigkeit (v) des Fahrzeugs erfolgt" **dadurch gekennzeichnet,**
**dass** der Lastschwellwert (LS) in Abhängigkeit von der bei der aktuellen Fahrgeschwindigkeit (v) auf den Wischerarm (140) wirkenden Windlast bestimmt wird.

12. Verfahren nach Anspruch 11,
**dadurch gekennzeichnet,**
**dass** die Wischhäufigkeit (WH) beim Überschreiten einer vorgegebenen Fahrgeschwindigkeit (v₁) automatisch reduziert wird.

## Claims

1. Control device (160) for controlling a drive unit (120) for at least one wiper arm (140) of a vehicle windshield wiper system (100), the control device (160) being designed to determine at least one load variable (L) of the drive unit (120) and to set the wiping frequency (WH) of the wiper arm (140) on the basis of the ratio of the determined load variable (L) to at least one load threshold value (LS), and the control device (160) being designed to perform the setting of the wiping frequency (WH) depending on the present traveling velocity (v) of the vehicle.
**characterized**
**in that** the control device (160) is designed to determine the load threshold value (LS) depending on the wind load acting on the wiper arm (140) at the present traveling velocity (v).

2. Control device (160) according to Claim 1,
**characterized**
**in that** the control device (160) is designed to increase the load threshold value (LS1, LS2), in the event of an increase in the traveling velocity (v), by a magnitude which corresponds substantially to the increase in the wind load acting on the wiper arm (140) brought about by the increase in traveling velocity.

3. Control device (160) according to Claim 1 or 2, **characterized**
**in that** the control device (160) is designed to implement the velocity-dependent matching of the load threshold value (LS) only at relatively high traveling velocities (v).

4. Control device (160) according to one of the preceding Claims 1 to 4,
**characterized**
**in that** the control device (160) is designed to reduce the wiping frequency (WH) in the event of an increase in the traveling velocity (v) and an increase, associated therewith, in the wind load acting on the wiper arm (140) in such a way that, as a result, the additional energy input brought about by the increase in wind load in the drive unit (120) is substantially compensated for.

5. Control device (160) according to one of the preceding claims,
**characterized**
**in that** the control device (160) is designed to automatically reduce the wiping frequency (WH) as soon as a predetermined traveling velocity (v1) is exceeded.

6. Control device (160) according to one of the preceding claims,
**characterized**
**in that** the control device (160) is designed to determine the load variable (L) on the basis of a model which simulates the present load state of the drive unit (120) on the basis of empirical values, physical rules and/or determined reference values, the control device (160) further being designed to reduce the wiping frequency (WH) when the load variable (L) determined in the process exceeds a predetermined load threshold value (LS).

7. Control device (160) according to one of the preceding claims,
**characterized**
**in that** the control device (160) is designed to switch over to an interval operating mode with freely parameterizable interval cycles in order to reduce a thermal load on the drive unit (120) caused by continuous wiping operations.

8. Control device (160) according to one of the preceding claims,
**characterized**
**in that** the control device (160) is designed to reduce the wiping frequency (WH) to zero in order to reduce a thermal load on the drive unit (120) caused by the wiping action and to resume the wiping action only as a result of a user input or an item of information from the vehicle electrical system.

9. Control device according to one of the preceding claims,
**characterized**
**in that** the control device (160) is designed to detect, on the basis of the ratio of at least one load variable (L) to a load threshold value (LS), whether a wiping operation is taking place on a dry or on a wet windshield, and
**in that** the control device (160) is also designed to reduce the wiping frequency (WH) in the case of a dry windshield to such an extent that the thermal load on the drive unit (120) remains below a threshold value, above which a thermal protection mechanism of the drive unit (120) is triggered.

10. Windshield wiper system (100) for a vehicle comprising a drive unit (120) for at least one wiper arm (140) and a control device (160) according to Claim 1.

11. Method for controlling a drive unit (120) of a windshield wiper system (100) of a vehicle having at least one wiper arm (140),
at least one load variable (L) of the drive unit (120) being determined, and the wiping frequency (WH) of the wiper arm (140) being set on the basis of the ratio of the determined load variable (L) to at least one load threshold value (LS), and
the setting of the wiping frequency (WH) taking place depending on the present traveling velocity (v) of the vehicle,
**characterized**
**in that** the load threshold value (LS) is determined depending on the wind load acting on the wiper arm (140) at the present traveling velocity (v).

12. Method according to Claim 11,
**characterized**
**in that** the wiping frequency (WH) is reduced automatically when a predetermined traveling velocity (v₁) is exceeded.

## Revendications

1. Dispositif de commande (160) destiné à commander une unité d'entraînement (120) pour au moins un bras (140) d'essuie-glace d'un système d'essuie-glace (100) d'un véhicule, le dispositif de commande (160) étant conçu pour déterminer au moins une grandeur de charge (L) de l'unité d'entraînement (120) et pour régler la fréquence d'essuyage (WH) du bras (140) d'essuie-glace à l'aide du rapport entre la grandeur de charge (L) déterminée et au moins une valeur de charge seuil (LS) et le dispositif de commande (160) étant conçu pour procéder au réglage de la fréquence d'essuyage (WH) en fonction de la vitesse de conduite (v) actuelle du véhicule,
**caractérisé en ce que**
le dispositif de commande (160) est conçu pour déterminer la valeur de charge seuil (LS) en fonction de la charge exercée par le vent sur le bras (140) d'essuie-glace, à la vitesse de conduite (v) actuelle.

2. Dispositif de commande (160) selon la revendication 1,
**caractérisé en ce que**
lors d'une augmentation de la vitesse de conduite (v), le dispositif de commande (160) est conçu pour augmenter la valeur de charge seuil (LS1, LS2) d'une valeur qui correspond sensiblement à l'accroissement provoqué par l'augmentation de la vitesse de conduite de la charge exercée par le vent sur le bras (140) d'essuie-glace.

3. Dispositif de commande (160) selon la revendication 1 ou la revendication 2,
**caractérisé en ce que**
le dispositif de commande (160) est conçu pour ne procéder à l'adaptation dépendant de la vitesse de la valeur de charge seuil (LS) qu'à des vitesses de conduites (v) élevées.

4. Dispositif de commande (160) selon l'une quelconque des revendications 1 à 3,
**caractérisé en ce que**
le dispositif de commande (160) est conçu pour réduire la fréquence d'essuyage (WH) lors d'une augmentation de la vitesse de conduite (v) et un accroissement qui l'accompagne de la charge exercée par le vent sur le bras (140) d'essuie-glace de sorte à compenser sensiblement l'introduction d'énergie supplémentaire dans l'unité d'entraînement (120) due à l'accroissement de la charge du vent.

5. Dispositif de commande (160) selon l'une quelconque des revendications précédentes,
**caractérisé en ce que**
le dispositif de commande (160) est conçu pour réduire automatiquement la fréquence d'essuyage (WH) dès qu'une vitesse de conduite (v1) prédéfinie est dépassée.

6. Dispositif de commande (160) selon l'une quelconque des revendications précédentes,
**caractérisé en ce que**
le dispositif de commande (160) est conçu pour déterminer la grandeur de charge (L) à l'aide d'un modèle, lequel reproduit l'état de charge actuel de l'unité d'entraînement (120) à l'aide de valeurs expérimentales, de règles physiques et/ou de valeurs de référence déterminées,
le dispositif de commande (160) étant conçu par ailleurs pour réduire la fréquence d'essuyage (WH) lorsque la grandeur de charge (L) ainsi déterminée dépasse une valeur de charge seuil (LS) prédéfinie.

7. Dispositif de commande (160) selon l'une quelconque des revendications précédentes,
**caractérisé en ce que**
pour la réduction d'une contrainte thermique de l'unité d'entraînement (120) provoquée par un mode d'essuyage continu, le dispositif de commande (160) est conçu pour commuter sur un mode par intervalles avec des cycles d'intervalles librement paramétrables.

8. Dispositif de commande (160) selon l'une quelconque des revendications précédentes,
**caractérisé en ce que**
pour la réduction d'une contrainte thermique de l'unité d'entraînement (120) provoquée par l'action d'essuyage, le dispositif de commande (160) est conçu pour réduire à zéro la fréquence d'essuyage (WH) et pour ne reprendre l'action d'essuyage que suite à une saisie par l'utilisateur ou à une information du réseau de bord.

9. Dispositif de commande selon l'une quelconque des revendications précédentes,
**caractérisé en ce**
**qu'**à l'aide du rapport entre au moins une grandeur de charge (L) et une valeur de charge seuil (LS), le dispositif de commande (160) est conçu pour détecter si un processus d'essuyage s'effectue sur une vitre sèche ou mouillée et
en ce que dans le cas d'une vitre sèche, le dispositif de commande (160) est conçu par ailleurs pour réduire la fréquence d'essuyage (WH) de telle sorte que la contrainte thermique de l'unité d'entraînement (120) reste inférieure à une valeur seuil, à partir de laquelle un mécanisme de protection thermique de l'unité d'entraînement (120) se déclenche.

10. Système d'essuie-glace (100) pour un véhicule, comprenant une unité d'entraînement (120) pour au moins un bras (140) d'essuie-glace et un dispositif de commande (160) selon la revendication 1.

11. Procédé destiné à commander une unité d'entraînement (120) d'un système d'essuie-glace (100) d'un véhicule comportant au moins un bras (140) d'essuie-glace,
au moins une grandeur de charge (L) de l'unité d'entraînement (120) étant déterminée et la fréquence d'essuyage (WH) du bras (140) d'essuie-glace étant réglée à l'aide du rapport entre la grandeur de charge (L) déterminée et au moins une valeur de charge seuil (LS) et
le réglage de la fréquence d'essuyage (WH) s'effectuant en fonction de la vitesse de conduite (v) actuelle du véhicule,
**caractérisé en ce que**
la valeur de charge seuil (LS) est déterminée en fonction de la charge exercée par le vent sur le bras (140) d'essuie-glace, à la vitesse de conduite (v) actuelle.

12. Procédé selon la revendication 11,
**caractérisé en ce que**
lors du dépassement d'une vitesse de conduite (v₁) prédéfinie, la fréquence d'essuyage (WH) se réduit automatiquement.
